# EUROPEAN PATENT APPLICATION

(11) **EP 0 690 423 A2**
(43) Date of publication of application: **03.01.1996**
(21) Application number: 95304551.5
(22) Date of filing: 28.06.1995
(51) Int. Cl.: G07F 19/00, G07D 13/00, B65G 51/02

(54) **Pneumatic conveyor system and carrier for use in such system; and cash handling system**

(30) Priority: 01.07.1994 GB 9413313
(71) Applicant: D D Lamson Limited, Gosport Hampshire PO12 1BG (GB)
(72) Inventor: Glock, Alan John, Southsea, Hants PO4 9RH (GB); Edser, Malcolm, Waterlooville, Hants, PO8 8EP (GB); Irvine, Nicholas James, Near Fareham, Hants, PO14 2PX (GB); Bartlett, Michael Lawrence, Gospot, Hants, PO12 2JJ (GB)
(74) Representative: Spence, Anne

(57) **Abstract**

A pneumatic conveyor system (12) connects a cash holding station (15) with one or more dispensing stations, such as a teller's station (20) in a bank or a self service cash dispensing station (23). Cash may be fed into the conveyor system by automatic handling means (18). A carrier (26) for captive use in the conveyor system comprises a substantially cylindrical body (30) having a longitudinal axis (31) and an open end (33); a closure member (34) is permanently mounted on the carrier and movable between a closed position substantially closing the open end to retain sheet material, such as cash notes, therein and an open position in which such material can be inserted into or removed from the carrier. The closure member may comprise a plurality of elements (35) spaced around the periphery of the open end of the cylindrical body and each mounted at or adjacent the periphery for pivotal movement between a closed position extending across the open end and an open position in alignment with the cylindrical body wall. A piston (45) in the cylindrical body can be operated to positively dispense material from the carrier.

## Description

This invention relates to a pneumatic conveyor system, a carrier for use in such a system and a cash handling and transfer system incorporating a pneumatic conveyor system.

Pneumatic conveyor systems have been known for many years as a means for transporting a wide range of items such as cash, documents, medical samples and spare parts between different locations within a building. The items are carried in dedicated carriers which are transported along tubes by differentials in air pressure between opposite ends or parts of the tubes. Such pneumatic conveyor systems and their controls are well known and need not be described in detail.

The invention is particularly concerned with a pneumatic conveyor system for use in conveying cash between a holding station normally located in a secure area and a dispensing station where individual requests for cash are dispensed.

Although throughout this specification such stations are called holding and dispensing stations it should be appreciated that in most cases cash can be equally well carried from a dispensing station to a holding station.

For example the conveyor system may transport cash between a central station in a secure area of a bank and individual cashier/teller stations.

If large amounts of cash are held at or near individual dispensing stations, there is a considerable temptation to thieves and consequent risk of damage to people or property adjacent the station. For example, holding a considerable quantity of cash at a teller's station at a bank is a temptation to a smash and grab type thief. It is also conventional to locate an automatic type cash dispensing machine immediately behind a wall in which is located a "hole in the wall" type cash dispensing station by which a customer, using an individual identity card and a keyboard, can request and receive cash. It is not unknown for thieves to break the whole of the wall with a bulldozer in order to get at the cash dispensing machine which holds a large quantity of cash. In either case it is advantageous if the holding station for the cash can be located in a remote, secure area of the building.

One object of the present invention is to provide an improved pneumatic conveyor system for conveying cash between a central holding station and one or more dispensing stations. The cash at the holding station may be deposited into the conveyor system manually but in one aspect of the invention the holding station includes an automatic cash dispensing machine and transfer apparatus linking the cash dispensing machine and the pneumatic conveyor system.

The dispensing station may be manned such as a cashier's station in a bank but in another preferred aspect the invention provides that the dispensing station is an automatic "hole in the wall" type dispensing station and the system is arranged to automatically and positively dispense the cash at the dispensing station.

Another object of the invention, in one form, is to provide an improved carrier for use in a pneumatic conveyor system. Conventional carriers travel through the tube system in a closed state, are lifted out of the tube system at each station for filling or emptying and must be manually opened before they can be emptied or filled. Most conventional carriers have an end which is opened by a combined twisting movement and translation or pivoting movement and closed by a reverse of such combined movements. The opening and closing, if repeated many times, may cause repetitive strain injury.

In one form the invention provides a carrier for use in a pneumatic conveyor system which has an end which opens without a twisting movement preferably it opens by pushing a projection at the opposite end of the carrier from the open end. Preferably the system is such that the end of the carrier will be opened automatically when the carrier arrives at a station of the conveyor system.

In one form a pneumatic conveyor system comprises a conveyer tube system connecting a holding station with one or more dispensing stations, a carrier for holding material to be conveyed (hereinafter called "cash" but to include other documents and items), pneumatic control means arranged to cause the carrier to move along the tube system between these stations and in which the carrier is captive in the tube system and has an end which is arranged to be automatically opened when the carrier arrives at least at the or each dispensing station.

In another aspect the invention provides a pneumatic conveyor system comprising a conveyor tube system connecting a holding station with one or more dispensing stations, a carrier for holding cash, pneumatic means for causing the carrier to move along the tube system between the stations, and in which the carrier is captive in the tube system and includes dispensing means for positively dispensing cash from the carrier at least at the or each dispensing station. Preferably the dispensing means is a piston operated by pneumatic pressure to push the contents out of one end.

With advantage the carrier comprises a substantially cylindrical body with a longitudinal axis and with one open end and a closure member mounted at the open end and movable between an open and a closed position.

Preferably the carrier closure member comprises a plurality of elements spaced around the periphery of the open end of the cylindrical body and each mounted at or adjacent the periphery for pivotal movement between a closed position extending across the open end and an open position extending substantially in alignment with the cylindrical body wall. The elements may be in the form of tapered, shaped fingers of plastics or other preferably flexible material or may be bristles of a brush, for example. The biasing means may comprise a spring means arranged in an annulus around the elements or may be the natural spring of the material forming the elements.

Preferably each station includes mechanical means for opening the closure member of a carrier located at that station. Preferably the closure member is biased to a closed position and the opening means opens the carrier against the action of the biasing means.

With the above type of carrier the dispensing means is preferably a piston which is arranged to move parallel to the axis to push cash, which is loosely held in the cylindrical body, out of the open end. The piston may be retracted by a spring or by suction.

The carrier preferably includes an inner cylinder within an outer cylindrical body, the inner cylinder having an open end corresponding to the open end of the cylindrical body, the inner cylinder being movable axially to push the closure member to its open position.

Preferably the inner cylinder has a tubular end portion which extends through the opposite closed end of the cylindrical body and which can be pushed to move the inner cylinder to open the closure member.

In the pneumatic conveyor system, the means for opening a carrier at each station may comprise a mechanical arm arranged axially to push a projection of such inner cylinder.

The inner cylinder preferably includes a piston (forming the dispensing means) movable axially therein. With advantage the tubular end portion of the inner cylinder includes a passage having an inlet and an outlet spaced axially from the inlet, the arrangement being such that when the closure member of the carrier is closed the inner cylinder is fully in the cylindrical body and both the inlet and outlet are outside the cylindrical body but when the inner cylinder is moved to open the closure member, the outlet will open into the interior of the cylindrical body and be effectively connected to the interior of the inner cylinder while the inlet will open to the exterior of the cylindrical body. Any increase in pressure in the pneumatic tube system exterior to the cylindrical body at a dispensing station will therefore cause the piston to move down the inner cylinder and push any contents of the carrier out of the open end. The arrangement effectively forms a valve which is opened when the closure member is opened.

With such a positive dispensing action the opening to the pneumatic conveyor system at a dispensing station can be upwardly in a horizontal work surface, for example at a cashier's station in a bank or the like or can be substantially horizontal in a vertical surface, for example in the wall of a bank incorporating an automatic "hole in the wall" cash requesting and dispensing station or may if desired be substantially vertically downwardly.

The cash may be put into the carrier and pneumatic system at the holding station manually or the pneumatic conveyor system may be associated with an automatic cash dispensing machine. In another aspect the invention relates to the combination of a pneumatic conveyor system, an automatic cash dispensing machine and a mechanical transfer apparatus for transferring cash from the cash dispensing machine to the conveyor system.

Thus in a further aspect the invention provides a pneumatic conveyor system (preferably but not necessarily including the features described above) arranged to automatically transfer cash between a remote cash holding station and a dispensing station (which dispensing station may be the work station of a cashier or may be an automatic cash dispensing station) and an automatically controlled transfer apparatus for transferring cash from the cash dispensing machine to the pneumatic conveyor system.

The transfer apparatus may comprise a pair of jaws mounted on a carriage, means for moving the jaws together and apart to receive between them and grip cash released from the cash dispensing machine, drive means for moving the carriage lineally and preferably horizontally between a position adjacent the cash dispensing machine and a selected one of a plurality of captive carriers in a pneumatic conveyor system, and means for moving the jaws when so located with a second linear movement (preferably horizontal and preferably at right angles to the first linear movement), into the open end of such a carrier to deposit the cash therein.

One embodiment of pneumatic conveyor system, carrier therefor, and cash dispensing system will now be described by way of example only with reference to the accompanying drawings of which:-
Figure 1 is a diagrammatic view showing a pneumatic conveyor system connecting several different types of cash handling and dispensing stations and including a mechanical transfer apparatus for loading cash into the conveyor system,
Figure 2 is a section at a dispensing station through a carrier captive in one end of a tube of the system, with the carrier closed,
Figure 3 is a section similar to that of Figure 2 but with the carrier opened,
Figure 4 is a section similar to that of Figure 3 but with a piston of the carrier moved to its contents dispensed position,
Figure 5 parts a and b are sectional and end views of the carrier of Figures 2 to 4 with the closure member of the carrier shown in part a in the closed and open position and in part b only in its closed position,
Figures 6, 7 and 8 are side views of the open end of a carrier showing alternative forms of closure member, and
Figure 9 shows, on an enlarged scale, the holding station of Figure 1 with the transfer apparatus in a different position in the loading cycle.

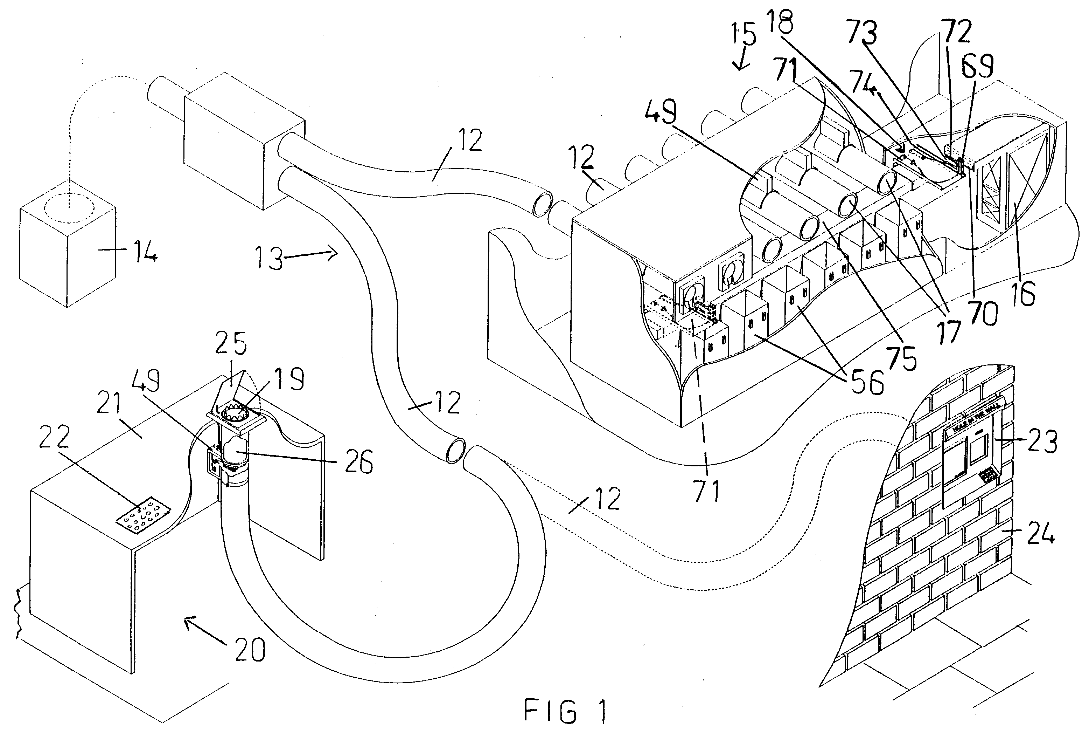

Referring first to Figure 1, a plurality of tubes 12 of a pneumatic conveyor system 13 connect various stations. Only some of the tubes and stations are shown, since pneumatic conveyor systems are known together with their pressure supply and control system, indicated diagrammatically at 14.

A holding station 15 is located preferably in a secure area of a bank or the like, for holding a supply of cash. In this example an automatic cash dispensing machine 16 is located at the holding station. A plurality of tube ends 17 of the system 13, are located side by side and preferably horizontally opening at the holding station 15 adjacent the automatic cash dispensing machine 16. A mechanical, automatically controlled, transfer apparatus 18, to be further described later, is located at the holding station and arranged to automatically load cash from the automatic cash dispensing machine into a carrier in any selected one of the tube ends 17. Each tube having an end at the holding station is connected to a separate dispensing station.

One form of dispensing station 20 comprises a work station of a cashier/teller of a bank, and in the example shown the tube 12 ends in an opening 19 in a horizontal work surface 21 including a keyboard 22 at the dispensing station. The latter part of the tube as it approaches the station is therefore upwardly vertical. As an alternative the tube could open horizontally into a substantially vertical surface of the work station.

Another form of dispensing station 23 comprises what is commonly called a "hole in the wall" cash dispensing station. Such a station includes means for receiving and checking a customer's identity card, a keyboard and monitor for communicating with the customer, and an opening for dispensing of cash to the customer. Such a "hole in the wall" dispensing station is usually located in an exterior wall 24 of a building such as a bank. It may be in an interior wall. Such dispensing station usually comprises a vertical panel and in this case the tube end will be horizontally opening. The tube could however open through a horizontal or angled ledge of the station or vertically downwardly.

The cash (or other document) to be conveyed between stations is conveyed through the tubes 12 in a carrier 26. In the system of this invention each carrier is captive in its tube. A (hinged) lid or cover, one of which is indicated at 25, may cover the opening at each dispensing station. The hinged lid/cover is driven by a small motor via a slipping clutch so that it opens when a carrier is present at a station and closes before a carrier is moved away from the station.

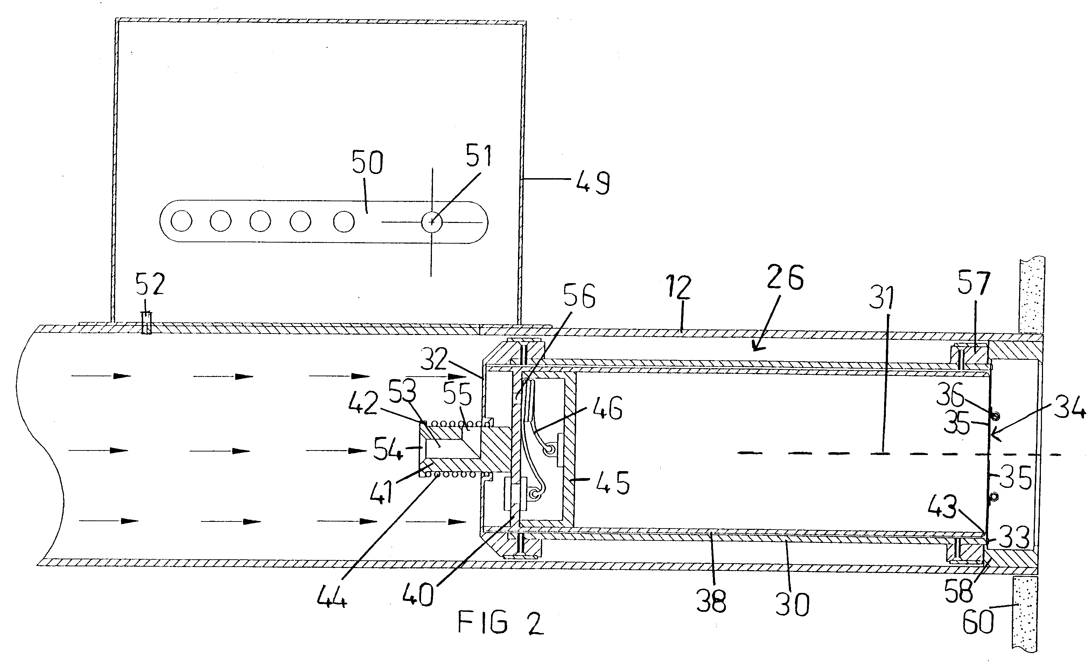

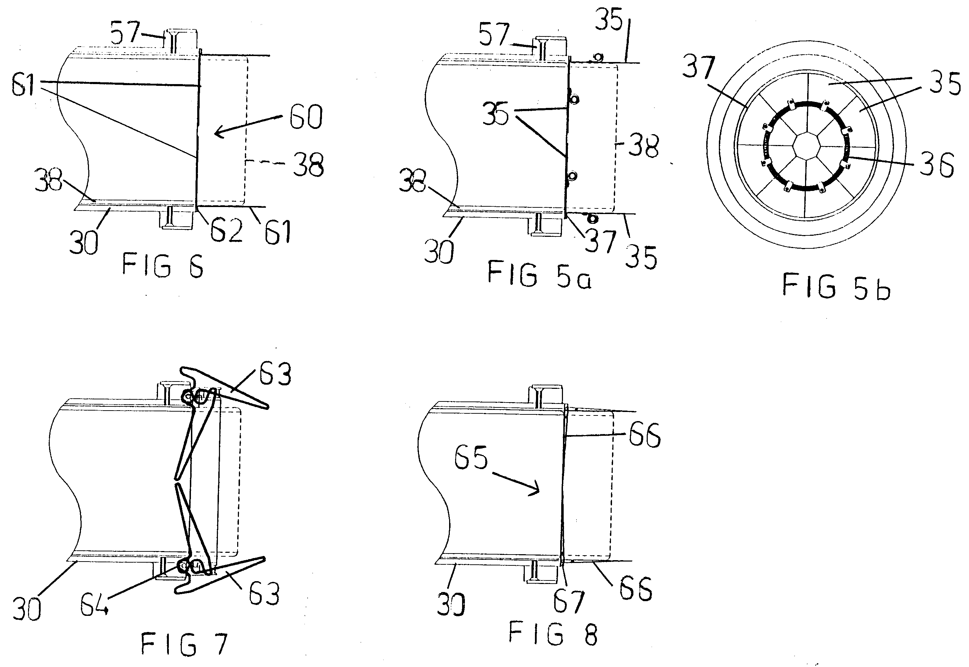

Referring next to Figures 2, 3 and 4, a carrier 26 comprises an outer, circular sectioned, cylindrical body 30 having an axis 31, a substantially closed inner end 32 and an open end 33. An annular closure member 34 has parts 35 pivotally mounted around the open end and movable between a closed position in which its parts extend across the open end and effectively close the carrier against egress of cash therefrom, and an open position allowing access to the interior of the carrier. In the open position the parts of the closure member extend substantially parallel to and form an outward extension of the cylindrical walls. The closure member is therefore always mounted to the carrier but is movable by automatically operated means between the open and closed positions. In the arrangement shown in Figures 2 to 4, and as more clearly seen in Figure 5 parts a and b, the closure member comprises a plurality of sector shaped arms 35, made of flexible plastics material and each hinged at 37 to the perimeter of the open end of the cylindrical body. An annular coil spring 36 connected to each arm 35 acts as biasing means to bias the closure member to the closed position.

The carrier 26 further comprises an inner cylinder 38, axially slidable in the cylindrical body 30, and having an inner substantially closed end 40 with an outward projection 41 extending through the closed end 32 of the cylindrical body 30 and ending in a flange 42. The inner cylinder 38 has an open end 43 substantially coinciding with the open end of the cylindrical body 30 in the closed position of the carrier. A spring 44 is compressed between the closed end 32 of the cylindrical body 30 and the flange 42 and acts as biasing means to bias the inner cylinder 38 in a direction inwardly of the cylindrical body 30, to the closed position of the carrier.

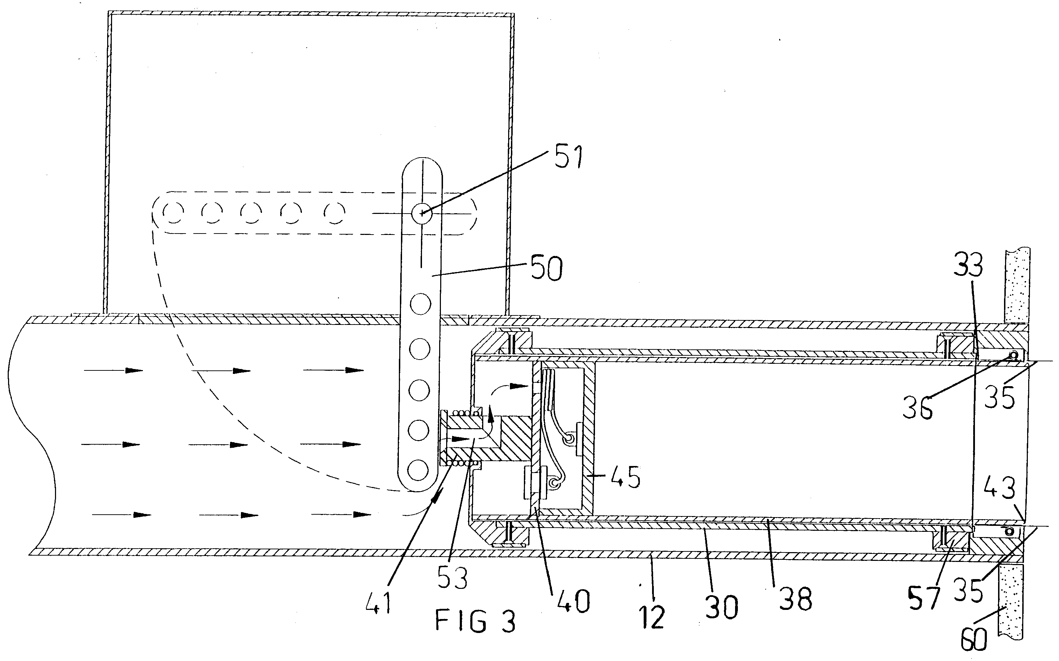

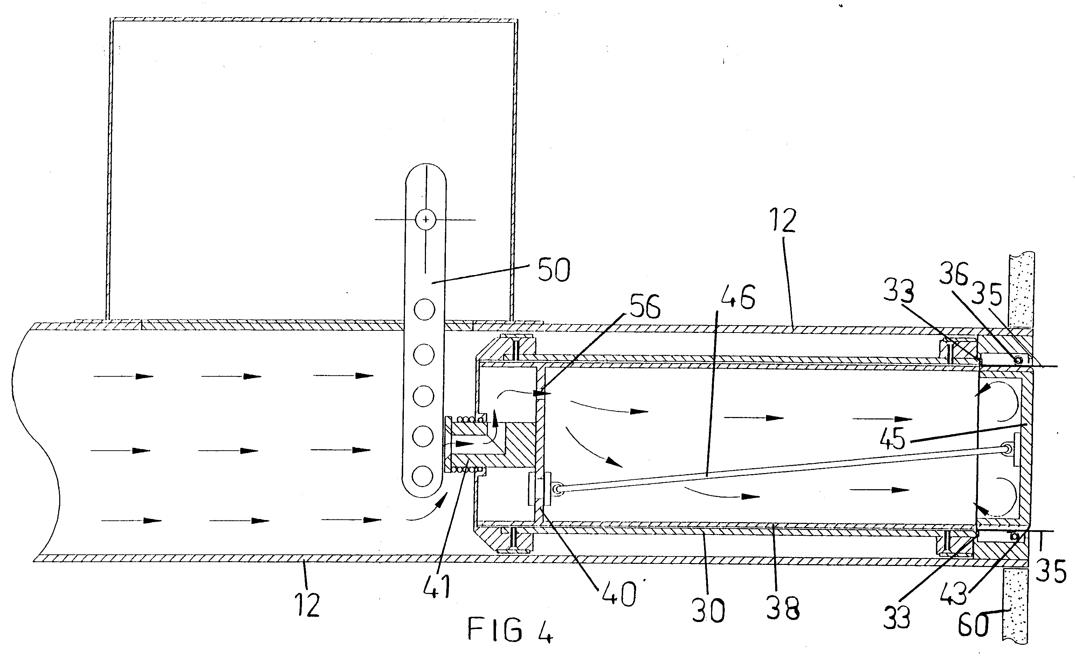

A cup-shaped piston 45 is slidably located in the inner cylinder for movement therein axially of the outer cylindrical body, between a withdrawn position at the closed end of the inner cylinder (as shown in Figures 2 and 3) and a contents dispensed position (Figure 4) at the open end of the tube system and substantially coinciding with the open end 43 of the inner cylinder. A flexible restraining member 46 extends between the piston and the inner end of the inner cylinder to restrain outward movement of the piston.

At each station a mechanical operating means is located in a box 49 on the tube 12 for opening a carrier when it has arrived at the station. The mechanical operating means comprises an arm 50 pivotally mounted about axis 51 and arranged to swing from the inactive position show in Figure 2 and in broken line in Figure 3 to the operative position shown in full line in Figures 3 and 4. In the operative position it pushes on the projection 41 causing the inner cylinder to move sufficiently out of the open end of the cylindrical body to push the closure member to its open position. A detector 52 is arranged at each station to detect the arrival of a carrier at the station and cause the opening of the carrier. Alternatively, the operating arm may be operated by an electrical signal under control of the operator at the dispensing station.

The projection 41 is formed with a channel 53 connecting a port 54 in its end surface to a port 55 in its side surface, axially spaced from the port 54. The arrangement is such that when the carrier is closed with the inner cylinder fully within the outer cylindrical body (apart from the projection 41) both of the ports 54 and 55 are outside the cylindrical body. However, when the carrier is opened so that the projection has moved partially within the cylindrical body, the port 54 is still external of the cylindrical body while the port 55 is within the cylindrical body. If pressure is now applied in the pneumatic tube that pressure is conveyed through channel 53 and a port 56 in the end 40 of the inner cylinder to the interior of the cylinder to drive the piston 45 to the open end of the carrier to positively dispense from the carrier any contents which were in the carrier.

In a preferred arrangement, although the carrier will be opened automatically as it arrives at a dispensing station, in response to detection of its arrival by the detector 52, the piston will not be operated to positively dispense the contents until a in pressure pulse, as a result of a positive instruction from a cashier at the dispensing station, is received.

Because of the positive dispensing action of the piston, which can sweep the whole volume of the carrier to push any contents out of the carrier and because the end of the carrier is openable the system is useful both with a hole in the wall type station where the cash can be positively dispensed automatically from the conveyor system and in an upwardly opening tube in a horizontal work surface at a cashier's station.

It will be appreciated that cash can also be transferred from the dispensing station through the conveyor system to the holding station. At the holding station, cash will be positively dispensed from the ends 17 of the tubes into collecting boxes 56.

In use therefore a cashier at station 20 or a customer at station 23 sends a request for a specific amount of cash, via a keyboard, to the secure holding station 15. The required cash is placed, either by the automatic cash dispensing machine and the transfer apparatus or manually, into a carrier at the appropriate tube end at station 15 and the control system 14 is operated to convey the carrier by pneumatic pressure and/or suction to the tube end at the appropriate dispensing station. Preferably the arrival of the carrier close to the tube end at the dispensing station triggers a reduction in the pressure so that the carrier arrives at the end of the tube under its own momentum. The open end of the carrier carries an external flange 57 which butts against stop means 58 defining the opening in a panel 60 at the dispensing station. Panel 60 may be the same as work surface 21. The detector 52 causes the arm 50 to swing and push the projection 41 to open the carrier and hold the carrier in its position at the open end of the tube. As seen in Figure 4 once the projection 41 is pushed into the cylindrical body air under pressure can flow into the inner cylinder and drive the piston to the carrier open end, thus dispensing cash. This operation is preferably initiated by a button on the cashier's desk which causes a pulse of high pressure. The piston is retracted by a similar button causing a pulse of suction pressure. The cashier may place cash into the open carrier and initiate a return movement of the carrier to the holding station where the cash is automatically dispensed on arrival at the holding station into a container 56. Alternatively the carrier may be automatically closed and returned to the holding station if it receives no positive instructions for a preset period.

Figures 6, 7 and 8 show other forms of closure member, alternative to the closure member shown in Figures 2 to 5, but all opened by movement of the inner cylinder within the cylindrical body, effectively by pushing on a projection at the opposite end of the carrier from its open end having the closure member. In Figure 6 the closure member 60 comprises an annular brush type of member comprising a large plurality of thin filament type elements 61 having their outer ends attached to the open end of the cylindrical body at 62 and naturally extending inwardly across the opening but being flexible outwardly when pushed by the outward movement of the inner cylinder, the open position being shown with the cylinder in broken line in each of Figures 6, 7 and 8. In the arrangement of Figure 7 the closure member comprises a plurality of solid, moulded sector shaped elements 63 located in an annulus and each pivoted at 64 to the exterior of the cylindrical body and mechanically linked to the inner cylinder so as to move between a closed position and an open position as shown.

In the arrangement of Figure B the closure member 65 comprises a plurality of sector shaped moulded plastics thin flexible elements 66 each having an outer end attached to the open end of the cylindrical body at 67 and being flexible between the open and closed positions, but naturally biased towards the closed position.

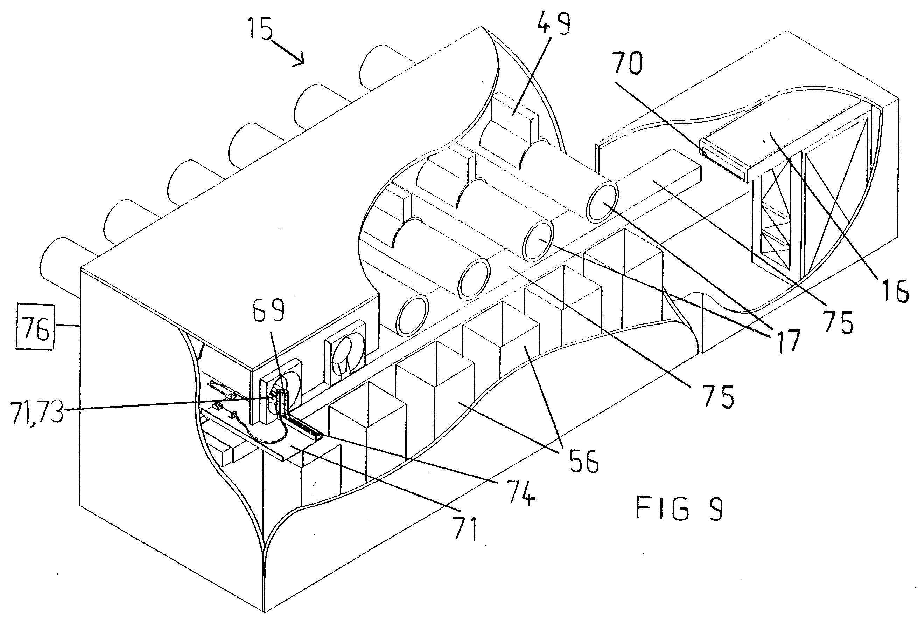

Referring next to Figures 1 and 9 the transfer apparatus 18 will now be described. The cash dispensing machine 16 is arranged to dispense cash through a slot 70 so that the cash lies in a horizontal plane partly projecting from the slot 70. The transfer apparatus 18 comprises a carrier 71 on which a pair of horizontally extending jaws 72, 73 are located on a post 69 for movement vertically towards and away from one another and also for movement horizontally on a rail 74 in a direction axially of the tube ends 17 at the station 15. The carrier 71 is itself mounted on a rail 75 which extends horizontally beneath the tube ends and in a direction normal to the axes of the tube ends. Drive and control means indicated diagrammatically at 76 are provided for operating the transfer apparatus.

When waiting to operate, the carrier 71 is normally positioned adjacent the cash dispensing machine 16 with the jaws open as seen in full line in Figure 1. When cash is to be dispensed to a dispensing station, the cash dispensing machine ejects cash partially through the slot 70, the jaws 72, 73 are moved relative to one another to close together around the cash and grip it. The carrier 71 is then moved along the rail 75 to a position in which the jaws 72, 73 are aligned with a selected tube end 17, this position is shown in broken line in Figure 1. The jaws are then moved together along the rail 74 into the carrier at the selected tube end, this position is shown in Figure 9. The cash has a larger dimension in the radial direction of the carrier than the internal diameter of the carrier and as it is pushed into the carrier it bends so that it is slightly curved and contacts the walls of the carrier with some friction. The jaws are then opened and the jaws withdrawn from the carrier leaving the cash within the carrier. The carrier is then returned to its waiting position adjacent the cash dispensing machine. The carrier thus moves cash automatically between the cash dispensing machine and the pneumatic conveyor system by two linear movements at right angles to one another. These movements need not be horizontal depending on the configuration of the other elements, although the arrangement shown is particularly convenient. Should the automatic transfer system not be working the tube ends are available for manual insertion of the cash. For a particularly busy system two cash dispensing machines could be arranged one at either end of the rail 75 and two carriers 71 could be located on the rail, each capable of serving any of the tubes 12. The number of tubes 12 can of course be increased to cover the number of stations to be serviced.

## Claims

1. A carrier (26) for use in a pneumatic conveyor system comprising a substantially cylindrical body (30) having a longitudinal axis (31) and an open end (33), closure means (34) permanently mounted on the carrier and movable between a closed position substantially closing the open end to retain sheet material therein and an open position in which such material can be inserted into or removed from the carrier, characterised by dispensing means (45) for pushing the contents of the carrier out of the open end.

2. A carrier according to Claim 1 characterised in that the closure means (34) comprises a plurality of elements (35) spaced around the periphery of the open end (33) of the cylindrical body and each mounted at or adjacent the periphery for pivotal movement between a closed position extending across the open end and an open position extending substantially in alignment with the cylindrical body wall (30).

3. A carrier according to Claim 2 characterised in that the elements (35) are flexible to move between the open and closed positions.

4. A carrier according to any of Claims 1 to 3 characterised by opening means including a projection (41) extending outwardly from the opposite end (32) of the carrier and effectively connected to the closure member (35) such that a push on the projection (41) acts to move the closure member to the open position.

5. A carrier according to any of Claims 1 to 4 characterised by an inner cylinder (38) axially slidable in the cylindrical body (30) and having an open end (43) substantially coinciding with the open end of the cylindrical body, the inner cylinder (38) being movable outwardly of the cylindrical body so as to move the closure member (35) to its open position.

6. A carrier according to any of Claims 1 to 5 characterised in that the dispensing means comprises a piston (45) axially movable in the body between a withdrawn position away from the open end (43) and a dispensing position adjacent the open end, movement of the piston towards the open end serving to positively dispense the contents of the carrier through the open end.

7. A carrier according to Claim 6 characterised by valve means arranged to provide a fluid connection between the side of the piston away from the open end and the exterior of the closed end of the cylindrical body when the closure member is moved to the open position.

8. A pneumatic conveyor system comprising a conveyor tube system (12) including at least one dispensing station (20, 23) and a plurality of carriers each according to any of Claims 1 to 7.

9. Cash handling apparatus comprising a conveyor tube system (12) connecting a holding station (15) with one or more dispensing stations (20, 23), at least one carrier (26) for holding cash, pneumatic means (14) for causing the or each carrier to move along the tube system between the stations, the or each carrier (26) being captive in the tube system and characterised by dispensing means (45) for positively dispensing cash from the carrier at least at the or each dispensing station.

10. Apparatus according to Claim 8 or Claim 9 characterised by means (50) for automatically opening the end (33) of the or each carrier at least when it arrives at the or each dispensing station (20, 23).

11. Apparatus for conveying and dispensing cash comprising a conveyor tube system (12) connecting a holding station (15) with one or more dispensing stations (20, 23), at least one carrier (26) for holding material to be conveyed, pneumatic control means (14) arranged to cause the or each carrier to move along the tube system between the stations and in which the or each carrier is captive in the tube system and has an end (33) which can be opened characterised by means (50) to automatically open the end (33) of a carrier when the carrier arrives at least at the or each dispensing station (20, 23).

12. Apparatus according to any of Claims 8 to 11 characterised in that a dispensing station is an automatic/self-service cash dispensing station (23).

13. Apparatus according to any of Claims 8 to 12 characterised in that the conveyor system at the or a dispensing station opens upwardly through a substantially horizontal surface (21) or sidewardly through a substantially vertical surface.

14. Apparatus according to any of Claims 8 to 13 including a cash holding and dispensing machine located at a holding station, characterised by an automatically controlled transfer apparatus (18) for transferring cash from the cash dispensing machine (16) to the pneumatic conveyor system (12).

15. Apparatus according to Claim 14 in which the transfer apparatus comprises a pair of jaws (72, 73) mounted on a carriage (71), means (76) for moving the jaws together and apart to receive between them and grip cash dispensed from the cash dispensing machine, drive means (76) for moving the carriage linearly and preferably horizontally between a position adjacent the cash dispensing machine (16) and a selected one of a plurality of captive carriers (26) in the pneumatic conveyor system (12), and means for moving the jaws when so located with a second linear movement (preferably horizontal and preferably at right angles to the first linear movement), into the open end (33) of such a carrier (26) to deposit the cash therein.
